# EUROPEAN PATENT APPLICATION

(11) **EP 4 700 863 A2**
(43) Date of publication of application: **25.02.2026**
(21) Application number: 25193864.3
(22) Date of filing: 04.08.2025
(51) Int. Cl.: H01M 4/36, H01M 4/38, H01M 4/42, H01M 4/60, H01M 4/66

(54) **REDOX ACTIVE ORGANIC MOLECULES FOR AQUEOUS ZINC-ION CELLS AND BATTERIES**

(30) Priority: 02.08.2024 US 202463678862 P
(71) Applicant: Salient Energy Inc., Dartmouth NS B3B 1C4 (CA)
(72) Inventor: Adams, Brian, Dartmouth, B3B 1C4 (CA); Baker, Thomas J., Dartmouth, B3B 1C4 (CA); Espinoza, Alejandra Ibarra, Dartmouth, B3B 1C4 (CA); Higgins, Drew C., Dartmouth, B3B 1C4 (CA); Schouten, Anja S. B., Dartmouth, B3B 1C4 (CA)
(74) Representative: Humphrey-Evans, Edward John

(57) **Abstract**

A secondary electrochemical cell for storing and delivering electrical energy is provided herein. The cell includes a negative electrode comprising a surface exposed to an aqueous electrolyte; the aqueous electrolyte for transferring zinc(II) (Zn²⁺) ions between the negative electrode and a positive electrode; and the positive electrode comprising at least one redox active organic molecule. The at least one redox organic molecule is insoluble in the aqueous electrolyte at all states of the cell. A method for chemically grafting 39,10-phenanthrenequinone (PQ) onto a carbon substrate is provided. The method includes functionalizing the PQ with an amino group to obtain PQ-NH₂; mixing the PQ-NH₂ with the carbon substrate in ethanol; sonicating the mixture to adsorb the PQ-NH₂ to the carbon substrate; adding the mixture to sulfuric acid (H₂SO₄) and sodium nitrite (NaNO₂) and mixing to obtain a grafting reaction; and extracting grafted material via vacuum filtration.

## Description

### Technical Field

The following relates generally to electrochemical cells, and more particularly to electrochemical cells that use metallic zinc as the negative electrode and a positive electrode comprising organic molecules.

### Introduction

The use of primary and secondary electrochemical cells employing zinc metal in commercial applications has been explored for decades. The use of zinc as a negative electrode material in aqueous batteries has many benefits including being nontoxic and inexpensive. Crucially, zinc metal is electrochemically stable in water due to a high overpotential for hydrogen evolution and has a low redox potential (-0.76 V vs. standard hydrogen electrode (SHE)) compared to other negative electrode materials used in aqueous batteries, enabling the highest voltage possible.

For rechargeable zinc-ion cells, a positive electrode material is selected that can reversibly intercalate/deintercalate with zinc cations carrying a 2+ charge (Zn²⁺). Often that material may be a metal oxide such as MnO2. However, these materials are susceptible to structural degradation via John-Teller distortion during cycling resulting in a loss of charge storage.

Redox active organic materials can be used as a positive electrode material in aqueous zinc-ion cells. Their use is particularly beneficial due to their chemical and structural tunability, high theoretical capacity, and low cost. No mining of critical minerals is necessary because these molecules are built from hydrocarbons, readily abundant in the form of biomass on the Earth's surface. Quinones are a type of redox active organic material that are small molecules of aromatic rings with pairs of carbonyl groups. The carbonyl groups allow for charge storage by interacting with Zn²⁺ ions via coordination bonding. The carbon rings can be adsorbed on conductive carbon substrate via π-π interactions.

One major drawback of using quinones in zinc-ion cell positive electrode materials is that the quinones are susceptible to dissolution into the aqueous electrolyte during cycling. Although most pristine quinones have low solubility in aqueous electrolytes, during discharge the quinone carbonyl groups are reduced and the quinone solubility increases when the molecule becomes polar upon coordination with Zn²⁺.

This dissolution leads to capacity fade as the cell cycles since the active material can diffuse away from the positive electrode. Overall, the achievable capacity in the zinc-ion cells noticeably decreases throughout cycling as quinones migrate away from their original active position.

Current strategies to limit dissolution include electrolyte modification and the formation of large quinone network structures. However, these strategies can be complex and expensive for industrial production of practical cell design. The electrolyte modifications include water-in-salt electrolytes and the usage of organic additives. They have effects on the electrolyte conductivity, viscosity, the solvation shell of Zn²⁺, and the stability of water which can reduce detrimental side reactions. The formation of quinone network structures is a strategy applied for increasing battery stability. To reduce the dissolution of organic active materials, it looks to increase the molecular weight and increase molecular interactions, including hydrogen bonds and π-π interactions. Additionally, the formation of symmetric organic structures can reduce the solubility of organic materials due to the lower dipole moment that can interact with water molecules.

Accordingly, there is a need for improved quinone stabilization techniques on zinc-ion positive electrode materials that can simply be adopted in the electrode material construction and stabilize the capacity of the cells with these organic molecules which overcome at least some of the disadvantages of existing systems and methods.

This background information is provided to reveal information believed by the applicant to be of possible relevance to the present disclosure. No admission is necessarily intended, nor should be construed, that any of the preceding information constitutes prior art against the present disclosure.

### Summary

A secondary electrochemical cell for storing and delivering electrical energy is provided. The cell includes a negative electrode comprising a surface exposed to an aqueous electrolyte; the aqueous electrolyte for transferring zinc(ll) (Zn²⁺) ions between the negative electrode and a positive electrode; and the positive electrode comprising at least one redox active organic molecule. The at least one redox organic molecule is insoluble in the aqueous electrolyte at all states of the cell.

In an embodiment, the at least one redox active organic molecule is a quinone molecule.

In an embodiment, the surface is one of: a zinc metal surface; and a zinc alloy surface.

In an embodiment, the aqueous electrolyte has a pH between 3 and 6.

In an embodiment, the quinone molecule contains a tert-alkyl functional group.

In an embodiment, the tert-alkyl functional group is a tert-butyl functional group.

In an embodiment, the quinone molecule includes additional functional groups including at least one of: alkanes; hydroxides; fluorides; chlorides; bromides; and amines.

In an embodiment, the quinone molecule includes ketone groups.

In an embodiment, the ketone groups are arranged in one of: ortho positions of an aromatic ring; and para positions of an aromatic ring.

In an embodiment, the quinone molecule electrochemically reacts reversibly with at least one of: Zn²⁺ cations; and protons.

In an embodiment, the quinone molecule is one of: chemically grafted onto an insoluble support; and electrochemically grafted onto an insoluble support.

In an embodiment, the insoluble support is comprised of at least one of: carbon particles; and polymer chains.

In an embodiment, the quinone molecule at least one of: is polymerized to decrease the solubility in the aqueous electrolyte; is adsorbed onto a conductive support; and is in the form of particles.

In an embodiment, the particles have a particle size diameter of 0.01 - 20 micrometers.

In an embodiment, the negative electrode comprises a current collector, wherein the current collector is formed substantially of a material selected from the group consisting of at least one of: carbon; aluminum; boron; lead; vanadium; chromium; manganese; iron; cobalt; nickel; cadmium; tungsten; bismuth; tin; indium; antimony; copper; titanium; and zinc metal.

In an embodiment, the positive electrode comprises a current collector, wherein the current collector is formed substantially of a material selected from the group consisting of at least one of: carbon; aluminum; boron; lead; vanadium; chromium; manganese; iron; cobalt; nickel; cadmium; tungsten; bismuth; tin; indium; antimony; copper; titanium; and zinc metal.

In an embodiment, the positive electrode includes an active material layer applied to the positive electrode current collector.

In an embodiment, the aqueous electrolyte includes a zinc salt dissolved in water.

In an embodiment, the aqueous electrolyte further includes a co-solvent.

In an embodiment, the zinc salt dissolved in water comprises 0.05 to 4 molar zinc cations (Zn²⁺) in the form of a zinc salt.

In an embodiment, the zinc salt is at least one of: zinc sulfate; zinc acetate; zinc iodide; zinc chloride; zinc perchlorate; zinc bis(trifluoromethanesulfonyl)imide; zinc nitrate; zinc triflate; zinc tetrafluoroborate; zinc trifluoroacetate; and zinc bromide.

In an embodiment, the cell further includes a separator between the negative electrode and the positive electrode to electrically insulate the negative electrode and the positive electrode.

In an embodiment, the separator at least one of: is porous; and contains the aqueous electrolyte.

In an embodiment, an average discharge voltage of the cell is between 0.5 V and 1.8 V.

A method for chemically grafting 39,10-phenanthrenequinone (PQ) onto a carbon substrate is provided. The method includes functionalizing the PQ with an amino group to obtain PQ-NH₂; mixing the PQ-NH₂ with the carbon substrate in ethanol; sonicating the mixture to adsorb the PQ-NH2 to the carbon substrate; adding the mixture to sulfuric acid (H₂SO₄) and sodium nitrite (NaNO₂) and mixing to obtain a grafting reaction; and extracting grafted material via vacuum filtration.

In an embodiment, the carbon substrate is Ketjenblack (KB).

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1A is a schematic diagram of an example rechargeable zinc metal battery during discharge, according to an embodiment;
Figure 1B is a schematic diagram of a grafted organic cathode ZI B battery operating in grid scale energy storage, according to an embodiment;
Figures 2A, 2B, 2C, 2D and 2E are depictions of example active functional groups in quinone structure, according to an embodiment;
Figure 3 is a representation of a chemical grafting technique for grafting quinones to a substrate, according to an embodiment;
Figure 4 is a variety of example para-quinones and ortho-quinones that may be used as positive electrode active material, according to an embodiment;
Figure 5A is a depiction of how zinc interacts with the active sites of 3,5-di-tert-butyl-o-benzoquinone (3,5-TB-o-BQ), according to an embodiment;
Figure 5B is a graph of cyclic voltammetry of cathodes at different scan rates of a 3,5-TB-o-BQ electrode, according to an embodiment;
Figure 6A is a capacity curve of the 3,5-TB-o-BQ, according to an embodiment;
Figure 6B is a depiction of the evolution of the specific capacity degradation of 3,5-TB-o-BQ, according to an embodiment;
Figure 6C is a depiction of dissolution of 3,5-TB-o-BQ in electrolyte through RRDE measurements, according to an embodiment;
Figure 7A is a depiction of how zinc interacts with the active sites of 39,10-phenanthrenequinone (PQ), according to an embodiment;
Figure 7B is a graph of the cyclic voltammetry of PQ electrodes at different scan rates, according to an embodiment;
Figure 8A is a capacity curve of a PQ electrode, according to an embodiment;
Figure 8B is a depiction of the evolution of the specific capacity of PQ throughout the first 15 cycles, according to an embodiment;
Figure 8C is a depiction of a dissolution of PQ in electrolyte through RRDE measurements, according to an embodiment;
Figure 9A is an example procedure for the chemical grafting of PQ on a carbon substrate, according to an embodiment;
Figure 9B is a flowchart of a method based on the example procedure of Figure 9A, according to an embodiment;
Figure 10 is a graph of thermogravimetric analysis (TGA) curves of PQ, adsorbed PQ to Ketjenblack, chemically grafted PQ to Ketjenblack, and Ketjenblack (KB), according to an embodiment;
Figure 11 is graphs for the FTIR spectrum of PQ, amino-9,10-phenanthrenequinone (PQ-NH2), nitro-9,10-phenanthrenequinone (PQ-NO2), and PQ grafted on Ketjenblack (Grafted PQ-KB), according to an embodiment;
Figure 12 is cyclic voltammetry curves of cathode material for Grafted PQ-KB, and adsorbed PQ on KB, according to an embodiment;
Figure 13 is a graph of capacity vs. cycle number for a zinc-ion cell with Grafted PQ-KB, according to an embodiment;
Figure 14A is a depiction of the bis-tetraaminobenzoquinone (TAQ) molecule in quinone form, according to an embodiment;
Figure 14B is a depiction of the tautomerism of the TAQ molecule in quinone form and imine form, according to an embodiment;
Figure 15 is a graph of the FTIR spectrum of TAQ, according to an embodiment;
Figure 16 is a graph of the dissolution of TAQ in water and methanol, according to an embodiment;
Figure 17 is a graph of the cyclic voltammetry of 80-TAQ, according to an embodiment;
Figure 18 is a graph of capacity vs. cycle number for 80-TAQ, according to an embodiment;
Figure 19 is a capacity curve of an 80-TAQ electrode, according to an embodiment;
Figure 20 is a depiction of the evolution of the specific capacity of 80-TAQ throughout the first 50 cycles, according to an embodiment;
Figure 21 is a depiction of a voltage profile of an 80-TAQ coin cell during a GDC test, according to an embodiment;
Figure 22 is a rate capability curve for 80-TAQ, according to an embodiment;
Figure 23 is a capacity curve of a 90-TAQ electrode, according to an embodiment;
Figure 24 is a depiction of the evolution of the specific capacity of 90-TAQ throughout the first 100 cycles, according to an embodiment;
Figure 25 is a rate capability curve for 80-TAQ, according to an embodiment;
Figure 26A is a depiction of the evolution of the specific capacity of TABQ throughout the first 100 cycles with a charge cutoff voltage of 1.2 V, according to an embodiment; and
Figure 26B is a depiction of the evolution of the specific capacity of TABQ throughout the first 100 cycles with a charge cutoff voltage of 1.3 V, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not it is specifically referred to.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes and methods may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

The following relates generally to a electrochemical cells, and more particularly to electrochemical cells that use metallic zinc as the negative electrode and a positive electrode comprising organic molecules.

Zinc metal negative electrodes and aqueous electrolytes can be used in a rechargeable battery with organic molecules as the active material in the positive electrode. The organic molecules coordinate with Zn²⁺ and are reduced during discharge and are oxidized during charge, disassociating with Zn²⁺. The organic molecules may be quinones and are stabilized to prevent dissolution in the aqueous electrolyte and extend cycle life of the rechargeable battery.

Advantageously, such batteries may be applied in stationary grid energy storage as renewable energy sources, in part due to the low cost and abundant components of the positive electrode materials.

Moreover, the grafting of organic molecules to conductive substrates may enhance the electron-transfer kinetics and reduce dissolution of quinone molecules from a positive electrode.

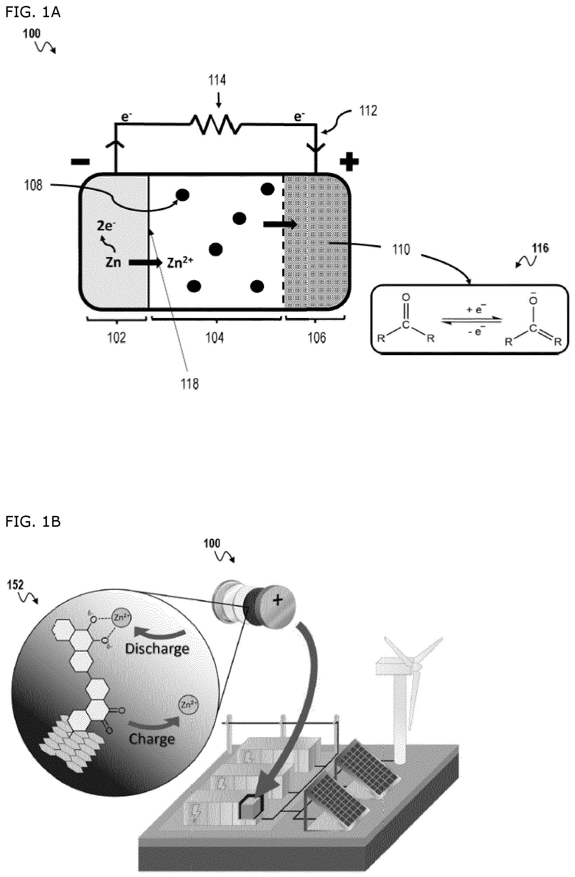

Referring now to Figure 1A, shown therein is schematic diagram of a secondary electrochemical cell (battery) 100 during discharge, according to an embodiment. The secondary electrochemical battery 100 may be a rechargeable zinc battery. The secondary electrochemical battery 100 may be for storing and delivering electrical energy. The battery 100 includes a negative electrode 102, an aqueous electrolyte 104, and a positive electrode 106.

The negative electrode 102 includes a surface 118 exposed to the aqueous electrolyte 104. The aqueous electrolyte 104 may be for transferring zinc(II) (Zn²⁺) ions between the negative electrode 102 and the positive electrode 106. The redox active organic material 110 is used as positive electrode 106 active material. The positive electrode 106 may include at least one redox active organic material 110 molecule.

The at least one redox active material 110 molecule is insoluble in the aqueous electrolyte at all states of the cell.

All states of the cell may include all states of charge or discharge during cycling of the cell.

During discharge, the negative electrode 102, which corresponds to zinc metal, is oxidized into Zn²⁺ cations 108 that solvate and migrate through the electrolyte 104. Electrons supplied from the oxidation of zinc metal in the negative electrode 102 flow through the external circuit 112, delivering power to an electrical load 114.

At the positive electrode 106, the redox active centers of the organic molecules 110 get reduced by electrons transported through the external circuit 112

The solvated zinc cations 108 electrochemically interact with the reduced functional groups of the positive electrode 106 active material (e.g., the redox active organic active material).

The expanded panel 116 illustrates the electrochemical reaction happening in the functional groups of the organic active material 110.

In a rechargeable zinc metal battery, the zinc metal oxidation (also referred to as stripping) and the Zn²⁺ interaction with the positive electrode active material is fully reversible.

During charge, the Zn²⁺ detach from the positive electrode 106 active material's active site and diffuse through the electrolyte 104 and are reduced to zinc metal in the negative electrode 102 (also referred to as plating).

In an embodiment, the active material is electrochemically grafted onto an insoluble support.

In an embodiment, the redox active organic material 110 includes a quinone molecule.

In an embodiment, the surface 118 is one of: a zinc metal surface; and a zinc alloy surface.

In an embodiment, the aqueous electrolyte 104 has a pH between 3 and 6.

In an embodiment, the aqueous electrolyte 104 has a pH between 3.5 and 6.5.

In an embodiment, the quinone molecule contains a tert-alkyl functional group.

In an embodiment, the tert-alkyl functional group is a tert-butyl functional group.

In an embodiment, the quinone molecule includes additional functional groups including at least one of: alkanes; hydroxides; fluorides; chlorides; bromides; and amines.

In an embodiment, the quinone molecule includes ketone groups.

In an embodiment, the ketone groups are arranged in one of: ortho positions of an aromatic ring; and para positions of an aromatic ring.

In an embodiment, the quinone molecule electrochemically reacts reversibly with at least one of: Zn²⁺ cations; and protons.

In an embodiment, the quinone molecule is one of: chemically grafted onto an insoluble support; and electrochemically grafted onto an insoluble support.

In an embodiment, the insoluble support is comprised of at least one of: carbon particles; and polymer chains.

In an embodiment, the quinone molecule at least one of: is polymerized to decrease the solubility in the aqueous electrolyte 104; is adsorbed onto a conductive support; and is in the form of particles.

In an embodiment, particles have a particle size diameter of 0.01 - 20 micrometers.

In an embodiment, the negative electrode 104 comprises a current collector.

In an embodiment, the current collector of the negative electrode 104 is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

In an embodiment, the positive electrode 106 comprises a current collector.

In an embodiment, the current collector of the positive electrode 106 is formed substantially of a material selected from the group consisting of at least one of: carbon, aluminum, boron, lead, vanadium, chromium, manganese, iron, cobalt, nickel, cadmium, tungsten, bismuth, tin, indium, antimony, copper, titanium, and zinc metal.

In an embodiment, the positive electrode 106 includes an active material layer applied to the positive electrode current collector.

In an embodiment, the aqueous electrolyte 104 includes an electrolyte salt.

In an embodiment, the aqueous electrolyte 104 includes a zinc salt dissolved in water.

In an embodiment, the aqueous electrolyte 104 further includes a co-solvent.

In an embodiment, the zinc salt dissolved in water comprises 0.05 to 4 molar zinc cations (Zn²⁺) in the form of a zinc salt.

In an embodiment, the zinc salt is at least one of: zinc sulfate, zinc acetate, zinc iodide, zinc chloride, zinc perchlorate, zinc bis(trifluoromethanesulfonyl)imide, zinc nitrate, zinc triflate, zinc tetrafluoroborate, zinc trifluoroacetate, and zinc bromide.

In an embodiment, the battery 100 further includes a separator between the negative electrode 102 and the positive electrode 106 to electrically insulate the negative electrode 102 and the positive electrode 106.

In an embodiment, the separator at least one of: is porous; and contains the aqueous electrolyte 104.

In an embodiment, an average discharge voltage of the cell is between 0.5 V and 1.8 V.

In an embodiment, the quinone molecule includes an inherently insoluble molecule.

In an embodiment, the quinone molecule includes bis-tetraaminobenzoquinone, (TAQ).

In an embodiment, the quinone molecule includes tetraamino-p-benzoquinone (TABQ).

While the components depicted in Figure 1A are disposed directly on one another, it should be understood that other components may also be present. In particular, and in some embodiments, the electrolyte 104 may be absorbed within a separator layer (not depicted in Figure 1A). Current collectors are also not depicted in Figure 1A, which may be present in various embodiments.

Referring now to Figure 1B, shown therein is a schematic diagram of a grafted organic cathode ZIB battery 100 operating in grid scale energy storage, according to an embodiment. The expanded panel 152 shows the interaction between the functional groups of the chemically grafted positive active material with zinc cations solvated in the electrolyte during discharge and charge. Advantageously, an application for the battery 100 described is in stationary grid energy storage for renewable energy sources due to the positive electrode materials low cost and abundant components. The chemical grafting of the positive electrode material to a carbon substrate has the intention of increasing the conductivity and stability of the positive electrode.

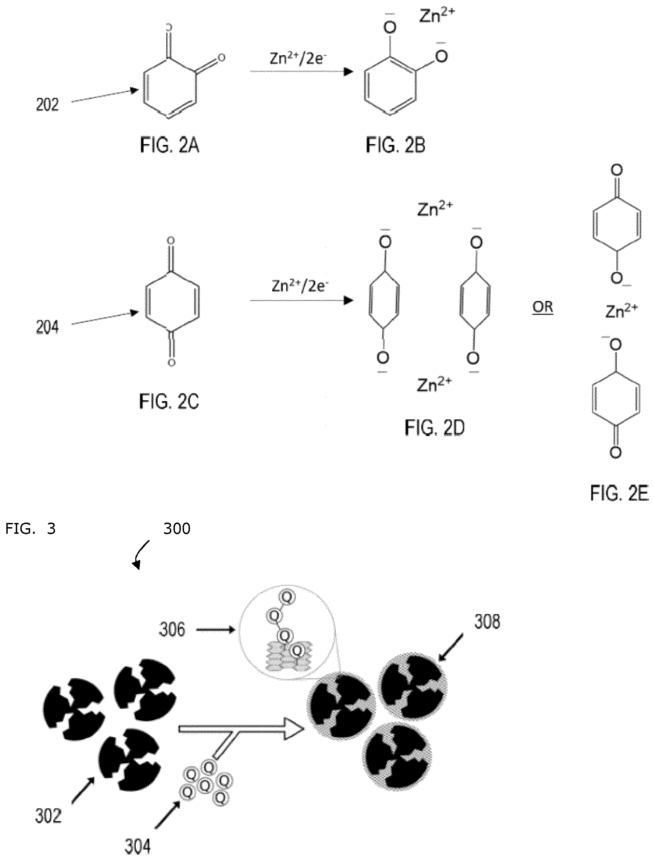

Referring now to Figures 2A-2E, shown therein are active functional groups in quinone structure, according to an embodiment.

In an embodiment, the quinone material forms part of a positive electrode of a zinc metal battery (e.g., positive electrode 106 of Figure 1A). In an embodiment, the quinone material improves one or more properties of the battery, such as voltage, capacity, rate at which the battery can be charged/discharged, and energy efficiency. In an embodiment, the quinone material includes one or more carbonyl groups in different positions, and/or other nitrogen-based or halogen-based groups. Due to the higher electronegativity of oxygen atoms in the carbonyl groups, the electrons received during the battery discharge are accepted by these functional groups (one each).

This creates a negative polarization of the quinone molecule that attracts the zinc cations solvated in the electrolyte. In an embodiment, depending on the position of the carbonyl groups, each zinc cation could interact with one or two quinone molecules.

Figure 2A shows a general structure of an ortho-quinone molecule 202. When the ortho-quinone molecule 202 receives two electrons, the oxygen groups gain a negative polarization which interacts with the positive charge of the zinc cations, as shown in Figure 2B.

Figure 2C shows a general schematic of a para-quinone molecule 204. Similar to the ortho-quinone molecule, when the para-quinone molecule gets reduced by two electrons, the oxygen groups become negatively polarized and interact with zinc cations in two possible ways: an interaction of two zinc cations with two para-quinones of adjacent layers (Figure 2D); or an interaction of one zinc cation with two para-quinones that are next to each other (Figure 2E).

Referring now to Figure 3, shown therein is a representation 300 of a chemical grafting technique for grafting quinones to a substrate, according to an embodiment. Such grafting techniques may be used for reducing the positive active material dissolution. A carbon black structure 302 may be a support for quinone molecules 304. Through chemical reactions, the quinones are attached to the carbon surface 306 and a carbon-quinone composite 308 may be obtained. Advantageously, the grafting of organic molecules to conductive substrates may enhance the electron-transfer kinetics and reduce dissolution of quinone molecules from a positive electrode. In an embodiment, grafting may be achieved through the reaction of aryldiazonium salts with sp2 carbon surfaces, creating carbon-carbon bonds between the quinone and the substrate.

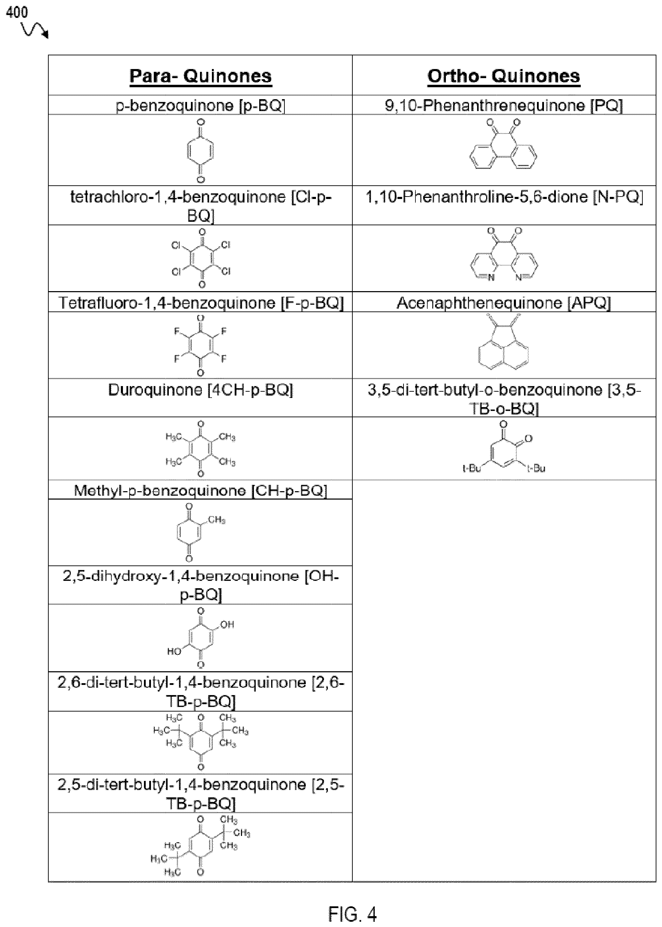

Referring now to Figure 4, shown therein is a table 400 of a variety of para-quinones and ortho-quinones that may be used as positive electrode active material, according to an embodiment. Examples are depicted with different functional groups attached to the main ring. As described in Figures 2A-2E, the position of the carbonyl groups determines how zinc cations interact with the molecule. In various embodiments, different substitutions in the aromatic ring may modify the voltage, specific capacity obtained, rate of charge/discharge, and how prone the molecule will be to dissolution. The bulkiness of the substitutions may be a characteristic that can inhibit the dissolution of the quinone in the electrolyte.

The symmetry of the molecule has a strong influence on its solubility in different solvents, like water, ethanol, or N-methyl-2-pyrrolidone (NMP). A molecule with a higher symmetry could have less dissolution in polar solvents like water. For example, 2,6-TB-p-BQ shows dissolution in ethanol, while 2,5-TB-p-BQ does not.

Electrochemical tests have been performed with some of the molecules described in Figure 4, in which they were used as positive electrodes in an aqueous zinc-ion battery for galvanostatic cycling and cyclic voltammetry.

**Table 1: Performance test results for quinones listed in Figure 4.**

| **MOLECULE NAME [ABBREVIATION]** | **1^{st} DISCHARGE CAPACITY FROM GALVANOSTATIC CYCLING [mAh/g]** | **REVERSIBLE REDOX PEAKS FROM CYCLIC VOLTAMMETRY?** |
|---|---|---|
| **p-benzoquinone [p-BQ]** | N/A | YES |
| **tetrachloro-1,4-benzoquinone [Cl-p-BQ]** | N/A | YES |
| **Tetrafluoro-1,4-benzoquinone [F-p-BQ]** | N/A | YES |
| **Duroquinone [4CH-p-BQ]** | 5 | N/A |
| **Methyl-p-benzoquinone [CH-p-BQ]** | 15 | N/A |
| **2,5-dihydroxy-1,4-benzoquinone [OH-p-BQ]** | 5 | N/A |
| **2,6-di-tert-butyl-1,4-benzoquinone [2,6-TB-p-BQ]** | 37 | N/A |
| **2,5-di-tert-butyl-1,4-benzoquinone [2,5-TB-p-BQ]** | 72 | N/A |
| **9,10-Phenanthrenequinone [PQ]** | 240 ± 20 | YES |
| **1,10-Phenanthroline-5,6-dione [N-PQ]** | N/A | NO |
| **Acenaphthenequinone [APQ]** | N/A | NO |
| **3,5-di-tert-butyl-o-benzoquinone [3,5-TB-o-BQ]** | 150 | YES |

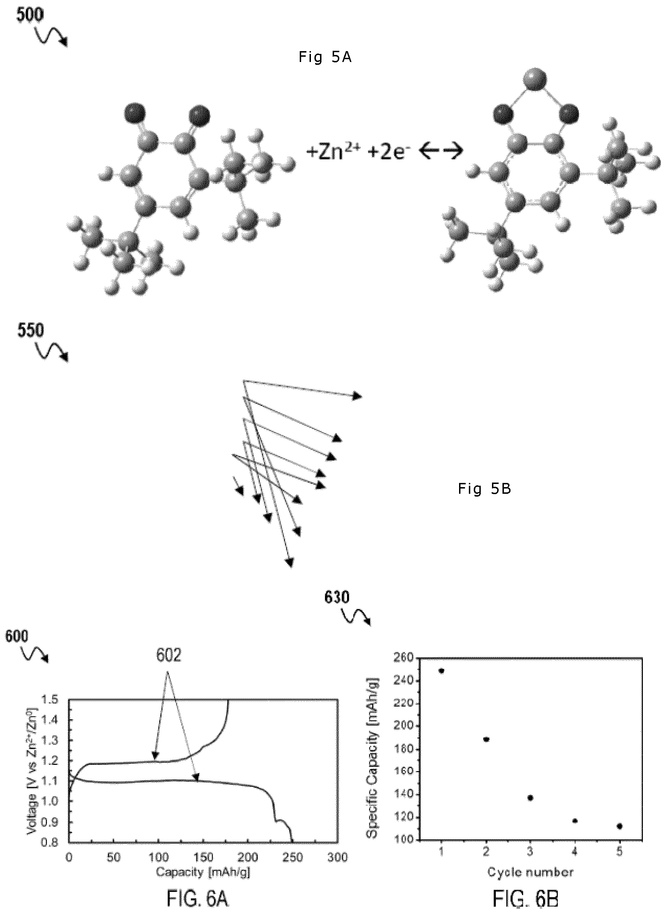

Referring now to Figure 5A, shown therein is a depiction 500 of how zinc interacts with the active sites of 3,5-di-tert-butyl-o-benzoquinone (3,5-TB-o-BQ), according to an embodiment. The carbonyl groups in ortho position, when reduced during discharge, gain a negative charge that attracts the positively charged zinc cation. During the charge process, the 3,5-TB-o-BQ molecule may be oxidized, and the zinc cation may be released to the electrolyte.

Referring now to Figure 5B, shown therein is a graph 550 of cyclic voltammetry of cathodes at different scan rates of a 3,5-TB-o-BQ electrode, according to an embodiment. Compared to the carbon electrode, the quinone-based electrodes show electrochemical activity. The curves show one distinct redox pair, meaning that this material may be redox active in the voltage range in which the zinc metal battery operates. The difference between the oxidation and reduction peaks (also called overpotential) becomes larger when the scan rate may be increased, which could indicate some conductivity issues from the material.

Referring now to Figure 6A, shown therein is a capacity curve 600 of the 3,5-TB-o-BQ with two distinct plateaus 602 at 1.1 V vs Zn/ Zn²⁺ and 1.2 V vs Zn/ Zn²⁺, according to an embodiment. The capacity curve is for a 3,5-TB-o-BQ electrode discharged at 0.01 A/g, achieving a C/20 rate. The test may be performed in coin cells format in a Neware battery station. The electrodes may be prepared using a planetary mixer for the slurry preparation. When the optimal slurry consistency may be achieved, the slurry may be casted on carbon paper using a doctor blade with a thickness of 250 µm. A conductive carbon black (CB) may be added to the slurry formulation, as well as a polyvinylidene fluoride (PVDF) binder. The solvent for the slurry may be NMP. The coin cell structure consisted of a glass microfiber separator of 200-300 µm of thickness, 2 M ZnSO₄ electrolyte, and the prepared cathode with a zinc foil negative electrode.

The capacity obtained may be 250 mAh/g from an electrode with a composition of 7:2:1 (TBOBQ: CB: PVDF). The electrode loading may be 0.375 mg/cm² and the electrolyte used may be a solution of 2 M ZnSO₄. The subsequent charge step shows a considerable undercharging, possibly caused by increased resistance of the electrode, irreversible side reactions during the discharge stage, or active material dissolution. The small distance between the charge and discharge curve indicates a low overpotential, which may be beneficial for a battery material since it enables higher power utilization.

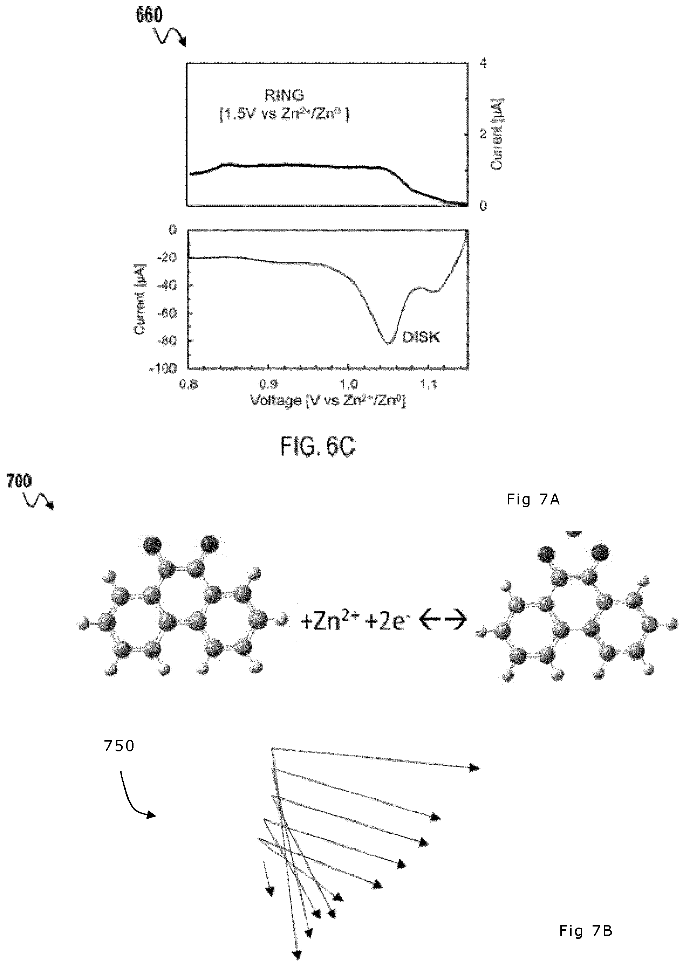

Figure 6B shows the evolution of the specific capacity degradation 630 of 3,5-TB-o-BQ during the first 5 cycles, according to an embodiment. An important capacity fade is observed, seeming to stabilize around 110 mAh/g. In relation to the possible capacity fade mechanisms, Figure 6C shows an evident dissolution 660 of 3,5-TB-o-BQ in the electrolyte through RRDE measurements, according to an embodiment.

A 5-neck flask with 150 mL of 1 M ZnSO₄ solution may be used as an electrochemical cell for the experiment. Zinc strips serve as reference and counter electrodes and argon is bubbled into the electrolyte solution to avoid the interference of any oxygen dissolved. The ink composition is as follows:
Solvent: ethanol + water (1:1)
Binder: Nafion (20 µL)
Conductive additive: Carbon black
Active material / Conductive additive ratio: 1:1

In an embodiment, the loading of the disk electrode may be 0.544 mg/cm2. While the electrode is rotating at 900 RPM, the ring may be under a chronoamperometry holding a potential of 1.5 V vs Zn/Zn2+. On the other hand, a linear sweep voltammetry may be applied to the disk from OCV to discharge voltage at a scan rate of 1 mV/s. A previous rest time of 5 min may be programmed on the disk experimental protocol to get the background signal on the ring.

It may be observed that the ring current starts to increase at the early stages of discharge, and then stabilizes until the end of the reduction step. The dissolution observed can be caused by the unbalanced polarization of the molecule during discharge, making it prone to interact with the polar water molecules of the electrolyte. Although, the tertbutyl groups can help inhibit the dissolution due to their bulkiness and their lack of polarity.

Referring now to Figure 7A, shown therein is depiction 700 of how zinc interacts with the active sites of 39,10-phenanthrenequinone (PQ), according to an embodiment. The zinc cations are attracted to the carbonyl groups in ortho position when they are reduced. When charged, the process reverts releasing the zinc cations to the electrolyte and the carbonyl groups getting oxidized.

Referring now to Figure 7B, shown therein is a graph 750 of the cyclic voltammetry of PQ electrodes at different scan rates, according to an embodiment. One oxidation peak and two reduction peaks are present in the measurement, indicating the oxidation and reduction of the carbonyl groups of the molecule, respectively. The voltage at which the peaks appear may be within the operating range of the zinc metal battery. The overpotential of the redox peaks increases with the scan rate, indicating possible conductivity issues with the electrode.

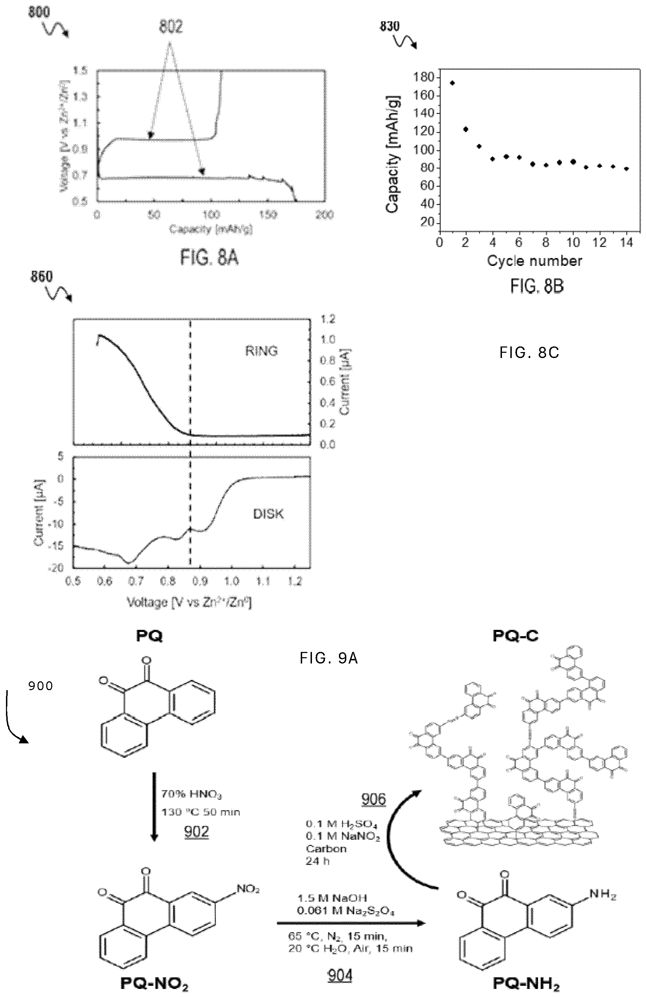

Referring now to Figure 8A, shown therein is a capacity curve 800 of a PQ electrode of a composition 6:3:1 (PQ: CB: PVDF) at a discharge current of 0.01 A/g, giving a C-rate of C/20, according to an embodiment. The capacity curve of the PQ with two distinct plateaus 802 at 0.7 V vs Zn/ Zn²⁺ and 1.0 V vs Zn/ Zn²⁺ for discharge and charge, respectively. The electrodes may be prepared using a planetary mixer with NMP as solvent, and PVDF as binder. A conductive carbon additive may be included as well. The slurry may be casted using a doctor blade with a thickness of 250 µm on a carbon paper. Next, the electrodes may be tested using coin cells with a glass microfiber separator of 200-300 µm of thickness and a 1 M ZnSO4 electrolyte with a zinc foil negative electrode. The capacity of the first discharge may be 175 mAh/g, with a very stable plateau at 0.7 V vs Zn/ Zn²⁺. The subsequent charging step shows an undercharging of 75 mAh/g, possibly caused by resistance issues, side reactions or dissolution of the molecule.

Figure 8B shows the evolution of the specific capacity 830 throughout the first 15 cycles, according to an embodiment. An important capacity fade is observed during the first 3 cycles, followed by a stabilization of it around 85 mAh/g.

Due to its unbalanced polarization when reduced, the PQ material is prone to dissolution 860 as shown in Figure 8C.

The experimental protocol for the Rotating Ring-Disk Electrode (RRDE) of PQ is similar to that described in Figure 6C. The ring current increases exponentially after the molecule is reduced below 0.88 V vs Zn/Zn2+. The capacity obtained after cycle 5 could come from a shuttle process where the PQ molecules are transported from one electrode to the other through the electrolyte.

Referring now to Figure 9A, shown therein is a procedure 900 for the chemical grafting of PQ on a carbon substrate, according to an embodiment. For grafting the quinone to the carbon, the quinone is, at 902, functionalized with an amino group to allow for the diazonium reactions to occur. For this, PQ may be loaded in a round bottom flask with 70% HNO3.

The flask may be stirred in a silicone oil bath at 130 °C for about 20 minutes, where the temperature is dipped to 100 °C, approximately, as all the organic material dissolved, and an endothermic reaction occurs.

The mixture is allowed to continue to stir and react at 130 °C for about 50 minutes in total after adding the nitric acid. The solution is then let to rest for about 45 minutes, followed by the recovery of the solids through vacuum filtration. The solids are subsequently dissolved in refluxing glacial acetic acid (stirred at 300 RPM) to form a solution that may be just unsaturated. The mixture is cooled to room temperature to allow the recrystallization of PQ-NO₂.

The next step, at 904, is the synthesis of PQ-NH₂. For this, PQ-NO₂ and sodium hydrosulfite are mixed in a round bottom flask. A 1.5 M solution of sodium hydroxide is then added and stirred at 300 RPM while being purged with nitrogen gas. The flask is submerged in a water bath and heated to 65 °C. The solution is stirred for about 15 minutes while it changes color from green to brown. The mixture is then removed from the bath/heat, diluted with room temperature water, and bubbled with air for 15 minutes. After 30 seconds to 2 minutes of bubbling, a large amount of black/purple precipitate forms causing the solution to look dark and opaque. The mixture is vacuum filtered, and the solids are dissolved in refluxing ethanol. The solution is cooled to allow the recrystallization of PQ-NH₂.

Finally, at 906, the chemical grafting is performed by mixing PQ-NH₂ with Ketjenblack (KB) in ethanol and sonicated for 1 hour to adsorb the quinone to the carbon. The suspension is poured into a beaker with 0.1 M H₂SO₄ and NaNO₂ is added to make a 0.1 M NaNO2 solution. The spontaneous grafting reaction occurs as the materials are mixed at 400 RPM for 24 hours at room temperature. The grafted material is extracted with vacuum filtration and washed several times with ethanol. The washing filtrate is recovered and the ethanol is evaporated leaving a residue material which is massed. It is assumed that the residue is only unbonded quinone. The calculated dried product ratio of grafted quinone to carbon is calculated by measuring the material lost during the washing process.

All cathode materials (grafted or absorbed) started with an initial mass ratio of 6:3 (PQ: KB), however washing the grafted material changed the ratio to 4:5. The cathodes with PQ absorbed on KB may be formed by sonicating PQ and KB for one hour to allow for π-π adsorption between the carbon support and the quinone. The electrode slurries may be prepared by mixing with PTFE (6:3:1 or 4:5:1 PQ: KB: PTFE mass ratio) with the adsorbed or grafted quinone - carbon materials using ethanol as a solvent in a planetary mixer. The slurry may be casted using a doctor blade with a thickness of 150 µm on carbon paper. The electrodes may then be incorporated and tested in a rechargeable zinc ion battery as described by Figure 1A.

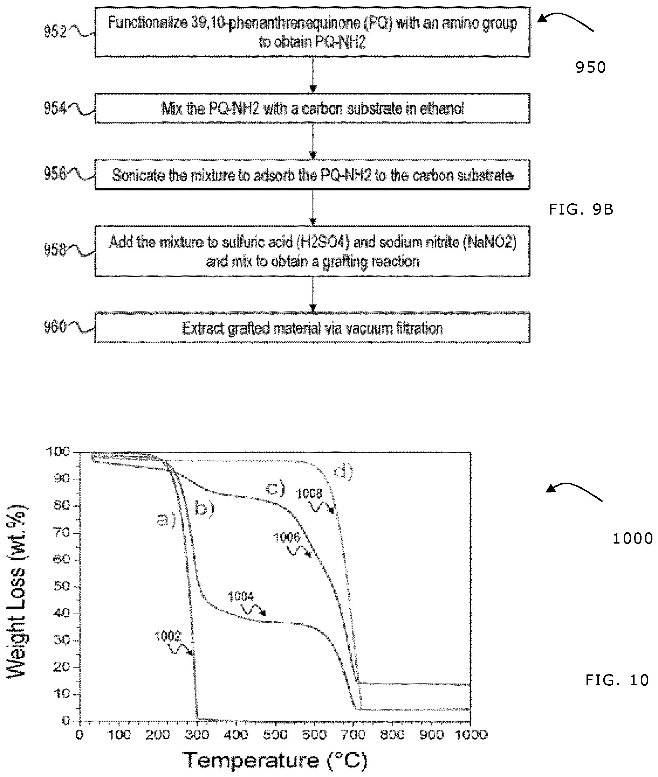

Referring now to Figure 9B, shown therein is a flowchart of a method 950 for chemically grafting 39,10-phenanthrenequinone (PQ) onto a carbon substrate, based on the procedure 900 of Figure 9A, according to an embodiment. At 952, the method 950 includes functionalizing the PQ with an amino group to obtain PQ-NH₂. At 954, the method 950 further includes mixing the PQ-NH₂ with the carbon substrate in ethanol. At 956, the method 950 further includes sonicating the mixture to adsorb the PQ-NH₂ to the carbon substrate. At 958, the method 950 further includes adding the mixture to sulfuric acid (H2SO4) and sodium nitrite (NaNO₂) and mixing to obtain a grafting reaction. At 960, the method 950 further includes extracting grafted material via vacuum filtration. In an embodiment, the carbon substrate is Ketjenblack (KB).

Referring now to Figure 10, shown therein is a graph 1000 of thermogravimetric analysis (TGA) curves of a) PQ 1002, b) adsorbed PQ to Ketjenblack 1004, c) chemically grafted PQ to Ketjenblack 1006, and d) Ketjenblack (KB) 1008, according to an embodiment. The measurements show a weight loss of all the samples as temperature is raised to 1000 °C. Ketjenblack 1008 decomposes around 575 °C, while PQ 1002 sublimes at a temperature around 200°C. The adsorbed 1004 and grafted quinone 1006 show TGA plots between these extremes as mixture of these materials. The large dip of the adsorbed quinone 1004 past 200 °C is attributed to the destruction of stabilizing π-π interactions and the subsequent sublimation of PQ away from the carbon support. The remaining adsorbed samples show a notable weight loss past 475 °C, but before the final drop past 600 °C which is due to the decomposition of the Ketjenblack support.

In the grafted sample 1006, the weight loss at 475 °C is attributed to the degradation of grafted quinone chains which require more energy and thus a higher temperature to decompose since they have covalent bonding, unlike the adsorbed PQ 1004. The small drop in weight at 250 °C of the grafted sample is associated with the residual quinone adsorbed and stabilized in the nanopores of the carbon, hence a slight increase in energy is required to remove these quinones compared to the pristine bulk and surface adsorbed quinone samples.

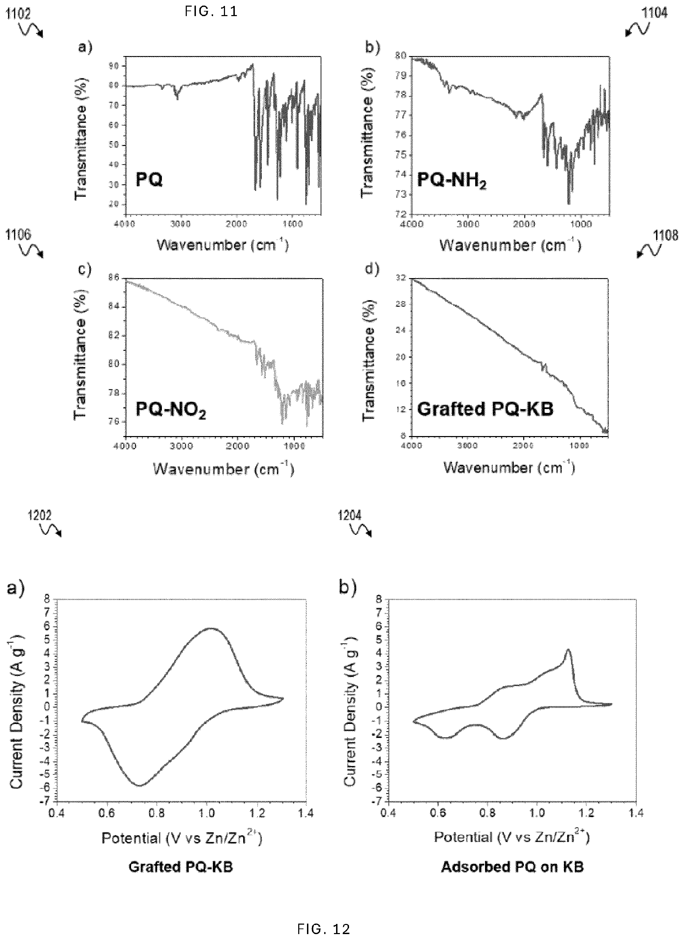

Referring now to Figure 11, shown therein are graphs for FTIR spectrum of a) PQ 1102, b) amino-9,10-phenanthrenequinone (PQ-NH₂) 1104, c) nitro-9,10-phenanthrenequinone (PQ-NO₂) 1106, and d) PQ grafted on Ketjenblack (Grafted PQ-KB) 1108, according to an embodiment. PQ 1102 shows characteristic peaks at 1670 cm-1 and 1590 cm-1, corresponding to C=O bonds stretching and these peaks can be seen in all quinone derivatives spectra, including the final product (1108). These suggest the presence of grafted quinone attached to the carbon surface. In 1106, the peak at 1150 cm-1 is associated with nitro stretching, while the two peaks below 3500 cm-1 and peaks at 1650 cm-1 in 1104 are associated with primary amine stretching and bending, respectively. 1108 lacks the distinct amino peaks which could suggest the absence of PQ-NH₂ in the grafted material. However, it is likely that there could still be some resembling PQ adsorbed on the carbon surface. The small size of all peaks can be explained by the interference of signal due to the large amount of carbon in the measured material.

Referring now to Figure 12, shown therein are cyclic voltammetry curves of cathode material (quinone, Ketjenblack, Polytetrafluoroethylene (PTFE)) for a) Grafted PQ-KB 1202, and b) adsorbed PQ on KB 1204, at 5 mV/s., according to an embodiment. The grafted quinone 1202 shows a bread redox peak amalgamating the smaller peaks that are highlighted by the adsorbed sample 1204. The broadening of the peak might be explained by the formation of an interface layer of exposed quinone groups for zinc coordination that results in more homogeneous carbon surface. Literature indicates that the PQ storage mechanism in zinc ion batteries is at least partially controlled by diffusion processes.

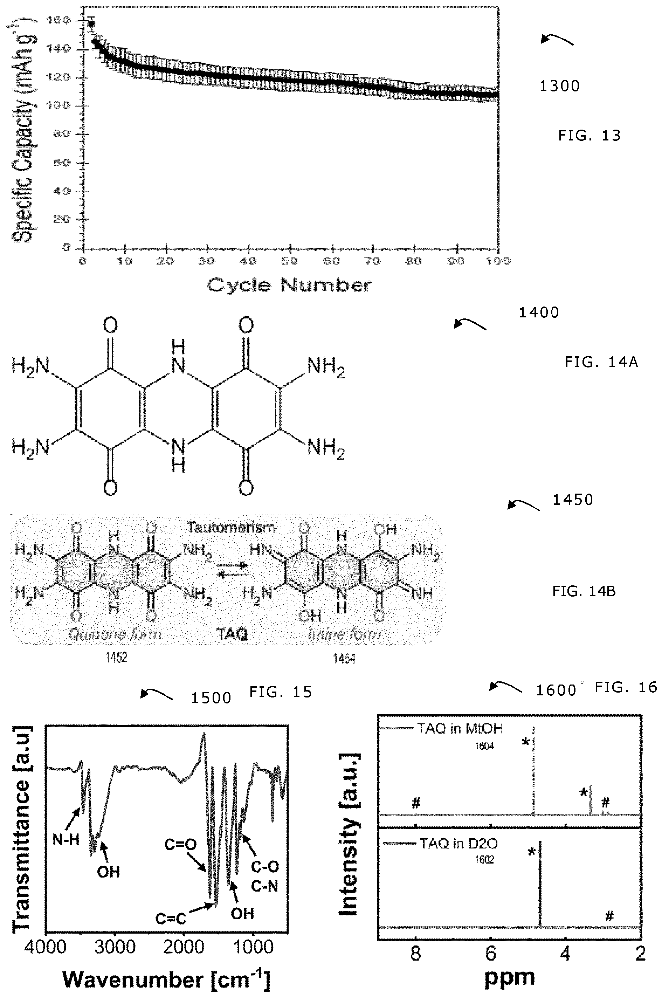

Referring now to Figure 13, shown therein is a graph 1300 of capacity vs. cycle number for a zinc-ion cell with Grafted PQ-KB, according to an embodiment. Specifically, graph 1300 shows the evolution of the specific capacity throughout the first 100 cycles of a Grafted PQ-KB electrode of a composition 4:5:1 (PQ: KB: PTFE) at a discharge current of 0.01 A/g, giving a C-rate of C/20. The electrodes may be prepared using a planetary mixer with ethanol as solvent, and PTFE as binder. The slurry may be casted using a doctor blade with a thickness of 150 µm on a carbon paper. Next, the electrodes may be tested using coin cells with a glass microfiber separator of 200-300 µm of thickness and a 1 M ZnSO₄ electrolyte with a zinc foil negative electrode. The capacity of the second discharge may be 160 mAh/g, and the capacity stabilized around 110 mAh/g.

It may be generally found that the type of functional group on the quinone molecule (Figure 4) affected the capacity obtained in zinc-ion cells. Table 2 shows a comparison of molecules with methyl, hydroxyl, and tert-butyl functional groups. The duroquinone containing methyl functional groups (Comparative Example 1) and the 2,5-dihydroxy-1,4-benzoquinone containing hydroxyl functional groups (Comparative Example 2) had negligible discharge capacity when used as the active material of positive electrodes in zinc-ion cells. On the other hand, all the molecules containing tert-butyl functional groups (Examples 1-3) had significantly higher capacity. Additionally, the 3,5-di-tert-butyl-o-benzoquinone (Example 1), with ketone groups arranged in the ortho position on the benzene ring, had significantly higher capacity than 2,6-di-tert-butyl-1,4-benzoquinone (Example 2) or 2,5-di-tert-butyl-1,4-benzoquinone (Example 3) where the ketone groups are arranged in the para position on the benzene ring.

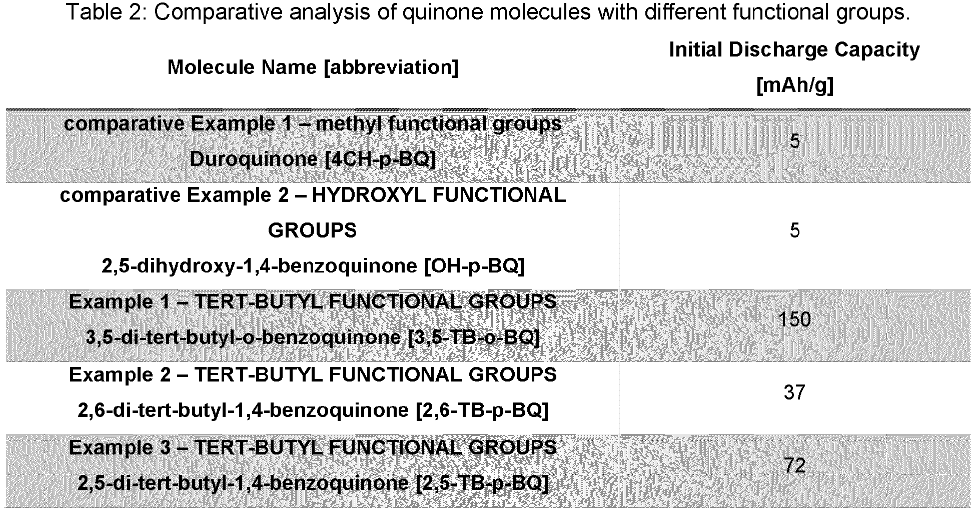

The capacity retention of zinc-ion cells may be improved by grafting quinone molecules to an insoluble carbon support. Table 3 shows a comparison of adsorbed 9,10-phenanthrenequinone (Comparative Example 3) grafted to the surface of carbon (Example 4). While the second cycle discharge capacity decreased after grafting the quinone, the stability increased drastically from 42 % capacity retention for the adsorbed material to 69% capacity retention after 100 cycles. The discharge capacity demonstrated in Table 3 is the second discharge capacity as this metric accurately reflects the reversibility of cells in this test. Figure 13 displays the evolution of the specific capacity throughout the 100 cycles.

**Table 3: Comparative analysis of conventional adsorbed quinone cathode performance to grafted cathode performance (100 cycles at 0.01 A/g).**

| | Second Discharge Capacity (mAh g⁻¹) | Capacity Retention (%) |
|---|---|---|
| Comparative Example 3 - ADSORBED QUINONE Adsorbed PQ on KB (60 PQ : 30 KB : 10 PTFE wt%) | 166 ± 5 | 42 ± 4 |
| Example 4 - GRAFTED QUINONE Grafted PQ-KB (40 PQ : 50 KB : 10 PTFE wt%) | 158 ± 5 | 69 ± 1 |

In an embodiment, the quinone molecule includes an inherently insoluble molecule.

In an embodiment, the quinone molecule includes bis-tetraaminobenzoquinone, (TAQ).

Referring now to Figure 14A, shown therein is a depiction 1400 of the bis-tetraaminobenzoquinone (TAQ) molecule in quinone form, according to an embodiment.

Referring now to Figure 14B, shown therein is a depiction 1450 of the tautomerism of the TAQ molecule in quinone form 1452 and imine form 1454, according to an embodiment.

Referring now to Figure 15, shown therein is a graph 1500 of the FTIR spectrum of TAQ, according to an embodiment.

Referring now to Figure 16, shown therein is a graph 1600 of the dissolution of TAQ in water 1602 and methanol 1604, according to an embodiment. In the graph 1600, # indicates dimethylformamide (DMF), and * indicates dimethyl sulfoxide (DMSO) (solvent). TAQ was insoluble in both solvent, while DMF was identified. Two different mass ratios of TAQ, acetylene black and PVDF may be prepared as ink: 80% TAQ; 10% acetylene black; 10% PVDF (80-TAQ) and 90% TAQ; 0% acetylene black; 10% PVDF (90-TAQ).

About 1.5 mL of DMF may be used as a solvent. The mixture may then be sonicated for about an hour. About 20 µl of ink may then be drop cast in carbon paper electrodes of 0.5" in diameter, and dried at 80 °C after each deposition. For the coin cell assembly, an anode of zinc foil may be used. For a separator, a glass fiber filter may be used. 1M ZnSO₄ may be used as the electrolyte in a quantity of about 150 µl.

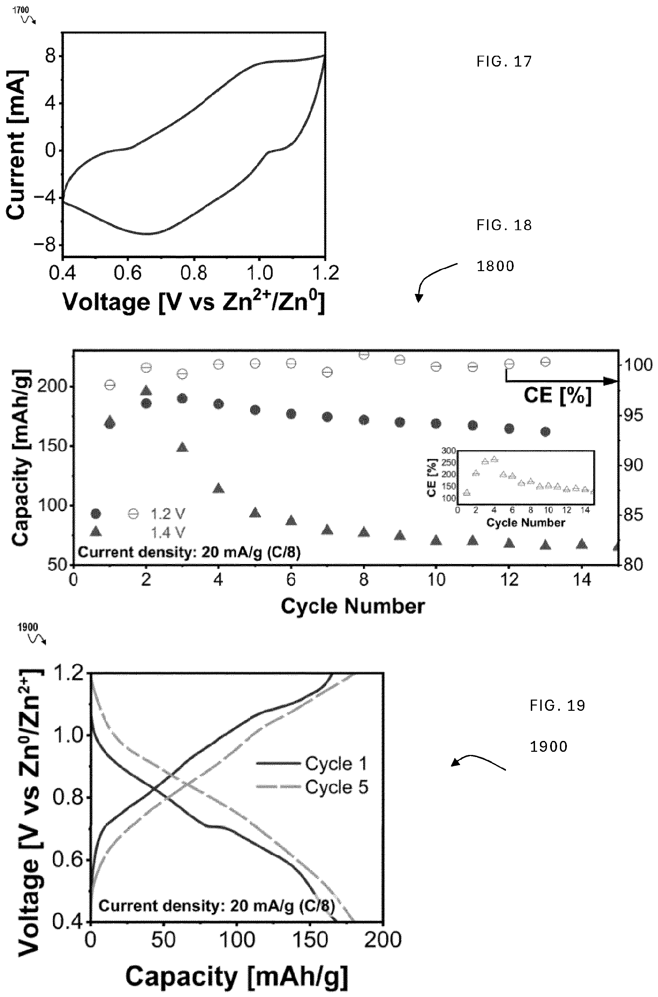

Referring now to Figure 17, shown therein is a graph 1700 of the cyclic voltammetry of 80-TAQ, according to an embodiment. A voltage window 0.4 to 1.2 V vs Zn/ Zn²⁺ may be used, with a rate of 10 mV/s. A small anodic peak may be observed at 1.0 V vs Zn/ Zn²⁺. A cathodic peak may be observed at 0.65 V vs Zn/ Zn²⁺.

Referring now to Figure 18, shown therein is a graph 1800 of capacity vs. cycle number for 80-TAQ, according to an embodiment. Capacity retention may improve when the cut-off voltage is reduced to 1.2 V.

Referring now to Figure 19, shown therein is a capacity curve 1900 of a 80-TAQ electrode, according to an embodiment. No flat plateaus may be observed. The average initial discharge capacity may be 167 mAh/g, while the average maximum capacity may be 187 mAh/g.

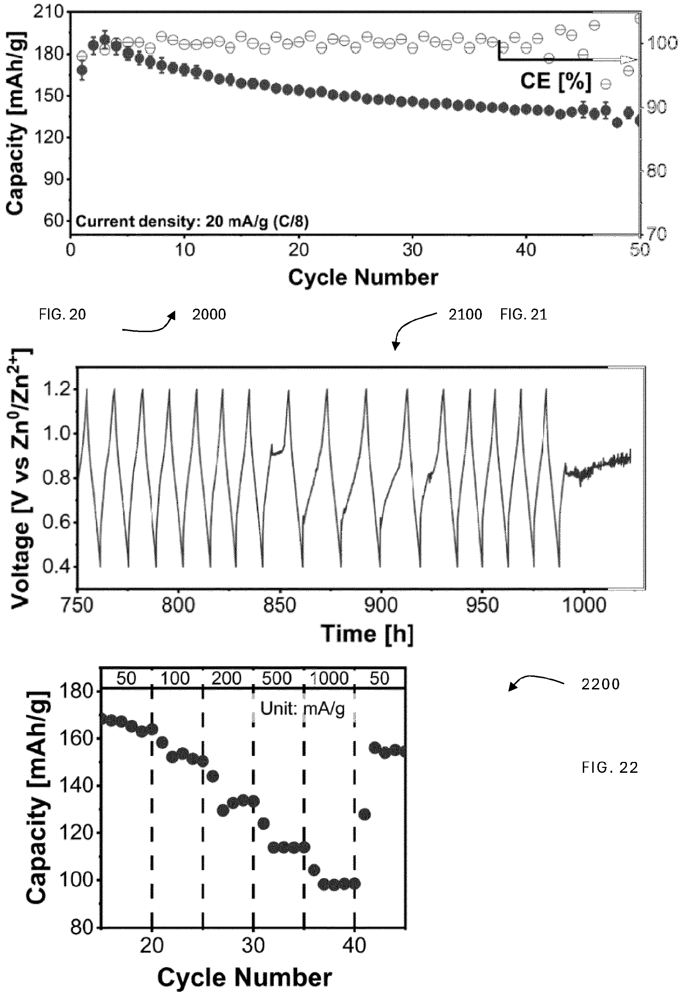

Referring now to Figure 20, shown therein is the evolution 2000 of the specific capacity of 80-TAQ throughout the first 50 cycles, according to an embodiment. Capacity may increase during the first 5 cycles. Discharge capacity delivered at cycle 50 may be 133 mAh/g, representing 71% of the maximum capacity.

Referring now to Figure 21, shown therein is a voltage profile 2100 of an 80-TAQ coin cell during the GDC test, according to an embodiment.

Referring now to Figure 22, shown therein is a rate capability curve 2200 for 80-TAQ at a cut-off voltage of 1.2V, according to an embodiment. The capacity at 50 mA/g may be about 166.7 mAh/g, while the capacity at 500 mA/g may be about 113.5 mAh/g. 68.1% of retention of the capacity at 50 mA/g may be observed when cycled at 500 mA/g.

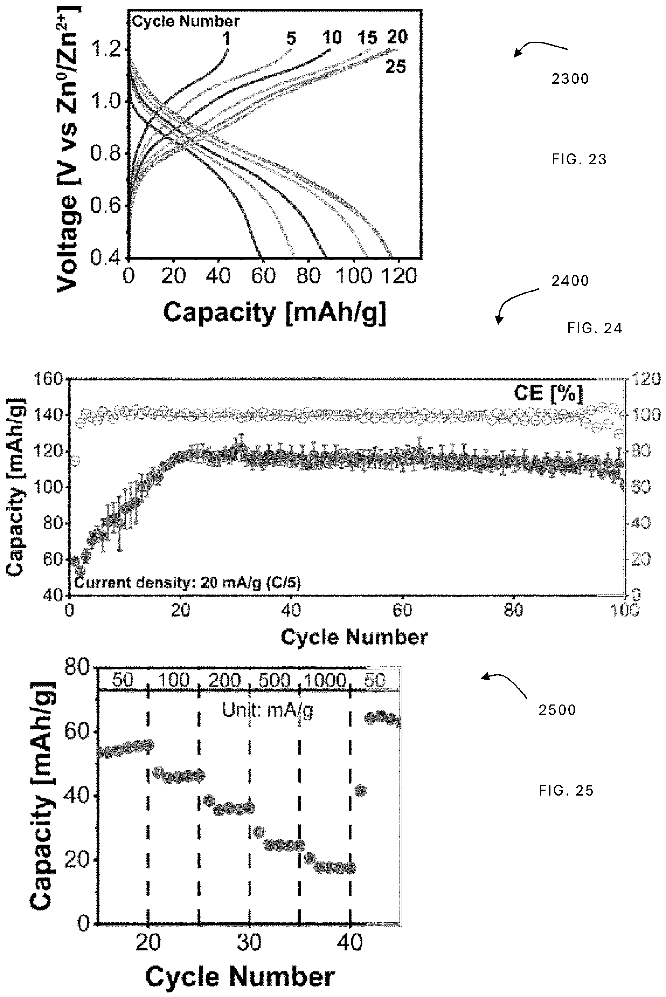

Referring now to Figure 23, shown therein is a capacity curve 2300 of a 90-TAQ electrode, according to an embodiment. No sharp plateaus may be observed. The dQ/dV may indicate two peaks, due to signal noise. An average initial discharge capacity may be about 59 mAh/g. An average maximum capacity may be about 110 mAh/g.

Referring now to Figure 24, shown therein is the evolution 2400 of the specific capacity of 90-TAQ throughout the first 100 cycles, according to an embodiment. Capacity increase may be observed over the first 20 cycles. An electrode with 90% TAQ and 10% binders may deliver about 105 mAh/g over 100 cycles.

Referring now to Figure 25, shown therein is a rate capability curve 2500 for 90-TAQ at a cut-off voltage of 1.2V, according to an embodiment. The capacity at 50 mA/g may be about 55.2 mAh/g, while the capacity at 500 mA/g may be about 25.1 mAh/g. As such, lower capacities may be obtained. 46% of retention of the capacity at 50 mA/g may be observed when cycled at 500 mA/g. In various embodiments, tetraamino-p-benzoquinone (TABQ), a precursor is the precursor of TAQ, may be utilized. Electrodes may be prepared through the drop-casting method, with ink preparation steps, and electrode preparation process a described herein. The mass ratio used may be the following: 50% TABQ; 40% acetylene black; 10% PVDF (50-TABQ).

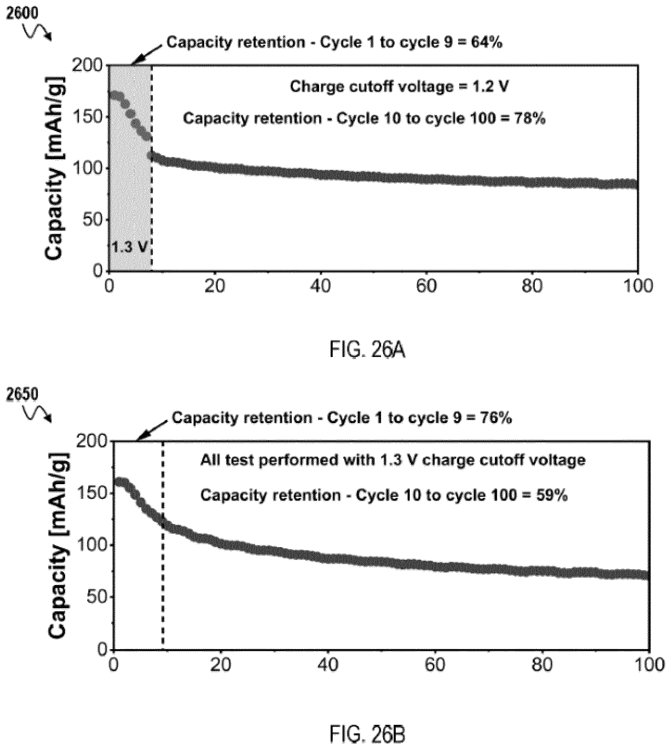

Referring now to Figure 26A, shown therein is the evolution 2600 of the specific capacity of TABQ throughout the first 100 cycles with a charge cutoff voltage of 1.2 V, according to an embodiment. TABQ may be tested in the voltage window of 0.4 to 1.3 V vs zinc. Overcharging may be observed, so the charge cutoff voltage may be reduced to 1.2 V vs ZN for some cells. Figure 26A displays the capacity retention of the cell with cutoff voltage of 1.3 V and 1.2 V vs Zn. The voltage cutoff was changed at cycle 10.

Referring now to Figure 26B, shown therein is the evolution of the specific capacity of TABQ throughout the first 100 cycles with a charge cutoff voltage of 1.3 V, according to an embodiment. In Figure 26B, the capacity retention of the cell with cutoff voltage of 1.3 V vs Zn for the total duration of the test is depicted.

While the above description provides examples of one or more apparatus, methods, or systems, it will be appreciated that other apparatus, methods, or systems may be within the scope of the claims as interpreted by one of skill in the art.

Elements of each embodiment may be incorporated into other embodiments, for example, configurations discussed in relation to one embodiment, may be applied to other embodiments disclosed herein.

Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A secondary electrochemical cell (100) for storing and delivering electrical energy, the cell comprising:
a negative electrode (102) comprising a surface (118) exposed to an aqueous electrolyte (104);
the aqueous electrolyte for transferring zinc(ll) (Zn²⁺) ions between the negative electrode and a positive electrode (106); and
the positive electrode comprising at least one redox active organic molecule (110), wherein the at least one redox organic molecule is insoluble in the aqueous electrolyte at all states of the cell.

2. The cell of claim 1, wherein the at least one redox active organic molecule is a quinone molecule.

3. The cell of claim 1 or 2, wherein the surface is one of: a zinc metal surface; and a zinc alloy surface.

4. The cell according to any one of claims 1 -3, wherein the aqueous electrolyte (104) has a pH between 3 and 6.

5. The cell of claim 2, wherein the quinone molecule (304) contains a tert-alkyl functional group, such as a tert-butyl functional group.

6. The cell of claim 2, wherein the quinone molecule is one of: chemically grafted onto an insoluble support; and electrochemically grafted onto an insoluble support.

7. The cell of claim 6, wherein the insoluble support is comprised of at least one of: carbon particles; and polymer chains.

8. The cell of claim 2, wherein the quinone molecule at least one of: is polymerized to decrease the solubility in the aqueous electrolyte; is adsorbed onto a conductive support; and is in the form of particles.

9. The cell according to any one of claims 1 - 8, wherein the negative electrode comprises a current collector, wherein the current collector is formed substantially of a material selected from the group consisting of at least one of: carbon; aluminum; boron; lead; vanadium; chromium; manganese; iron; cobalt; nickel; cadmium; tungsten; bismuth; tin; indium; antimony; copper; titanium; and zinc metal.

10. The cell according to any one of claims 1 - 9, wherein the positive electrode comprises a current collector, wherein the current collector is formed substantially of a material selected from the group consisting of at least one of: carbon; aluminum; boron; lead; vanadium; chromium; manganese; iron; cobalt; nickel; cadmium; tungsten; bismuth; tin; indium; antimony; copper; titanium; and zinc metal.

11. The cell according to any one of claims 1 - 10, wherein the aqueous electrolyte (104) includes a zinc salt dissolved in water.

12. The cell of claim 1, further including a separator between the negative electrode and the positive electrode to electrically insulate the negative electrode and the positive electrode.

13. The cell of claim 2, wherein the quinone molecule is inherently insoluble.

14. The cell of claim 13, wherein the quinone molecule is bis-tetraaminobenzoquinone, (TAQ).

15. A method (950) for chemically grafting 39,10-phenanthrenequinone (PQ) onto a carbon substrate, the method comprising:
functionalizing the PQ with an amino group to obtain PQ-NH₂ (step 952);
mixing the PQ-NH2 with the carbon substrate in ethanol (step 954);
sonicating the mixture to adsorb the PQ-NH₂ to the carbon substrate (step 956);
adding the mixture to sulfuric acid (H₂SO₄) and sodium nitrite (NaNO₂) and mixing to obtain a grafting reaction (step 958); and
extracting grafted material via vacuum filtration (step 960).
